# EUROPÄISCHE PATENTSCHRIFT

(11) **EP 4 088 583 B1**
(45) Veröffentlichungstag und Bekanntmachung des Hinweises auf die Patenterteilung: **02.07.2025**
(21) Anmeldenummer: 21173309.2
(22) Anmeldetag: 11.05.2021
(51) Int. Cl.: A23G 1/26, A23G 3/02, A23G 7/00

(54) **PRODUKTTRÄGER UND TRANSPORTVORRICHTUNG**
PRODUCT HOLDER AND TRANSPORTING DEVICE
TRANSPORTEUR DE PRODUITS ET DISPOSITIF DE TRANSPORT

(43) Veröffentlichungstag der Anmeldung: 16.11.2022
(73) Patentinhaber: Bühler GmbH, 51580 Reichshof (DE)
(72) Erfinder: Klein, Achim, 58638 Iserlohn (DE); Hauschulz, Kay, 53757 Sankt Augustin (DE); Chapman, Stephen, York, YO17ND (GB)
(74) Vertreter: Hepp Wenger Ryffel AG

(56) Entgegenhaltungen:
- EP-A1- 0 285 759
- EP-A1- 0 661 002
- EP-A1- 0 661 003
- US-A- 2 938 621
- US-A1- 2011 041 706

## Beschreibung

Die Erfindung betrifft einen Produktträger zum Transport von Lebensmittelprodukten, insbesondere Schokoladenprodukten, in einer Transportvorrichtung, sowie eine Transportvorrichtung.

Es ist bekannt, zum Herstellen von Schokoladenprodukten oder ähnlichen Erzeugnissen Produktträger zu verwenden, die im Wesentlichen aus einem rechteckigen Bauteil bestehen, das bevorzugt aus Kunststoff hergestellt ist, wobei in der Oberfläche Ausnehmungen oder Alveolen vorgesehen sind, in die eine Lebensmittelmasse eingegossen wird. Die anschliessende Weiterverarbeitung erfolgt z.B. in einer Kühlanlage oder in anderen Bearbeitungsstationen, die aus dem Stand der Technik bekannt sind.

Die Produktträger können entlang einer Anlage zur Herstellung von Lebensmittelprodukten zum Beispiel unter Zuhilfenahme von zwei parallel zueinander angeordneten Ketten transportiert werden. Derartige Ketten können mit abstehenden Mitnehmern ausgerüstet sein, die mit den Produktträgern in Kontakt kommen, um die Produktträger entlang der Anlage zu ziehen oder zu schieben.

Alternativ kann vorgesehene sein, die Produktträger mit einer Schubleistenanordnung zu fördern. Die Schubleisten weisen ebenfalls Mitnehmer zum Schieben der Produktträger auf, befördern den Produktträger allerdings nur entlang einer begrenzten Schubstrecke, wonach der Produktträger von nächsten Mitnehmern, gegebenenfalls einer nächsten Schubleistenanordnung, übernommen wird.

An den Bearbeitungsstationen werden die Produktträger typischerweise von einem Transportsystem der jeweiligen Bearbeitungsstation übernommen, beispielsweise einem Hubtisch, einer Schubleistenanordnung, einem Kettenantrieb oder einem Roboter. Die Übergabe muss so erfolgen, dass das Produkt nicht zu Schaden kommt.

In den Bearbeitungsstationen, die zum Beispiel als Module ausgebildet sein können, kann die Transportgeschwindigkeit variieren. Wird ein Produktträger von einer Bearbeitungsstation übernommen oder abgegeben, kann es daher notwendig sein, die Transportgeschwindigkeit anzupassen. Die Anlage kann dazu Pufferzonen umfassen.

Aus der EP0661002 A1 ist ein Produktträger bekannt, der an der Unterseite Vorsprünge aufweist, die formschlüssig mit den Gängen einer Gewindeschnecke in Wirkverbindung treten.

Aus der US2011041706A1 ist eine Maschine zur Herstellung von Schokolade bekannt, in welcher eine Vielzahl von Schokoladenformschalen mittels eines Hubbalkenförderers entlang eines Transportweges von einem Schokoladenspender zu einem Schokoladenkühler befördert wird. Die Schokoladenformschale hat eine rechteckige Grundfläche und ein Paar gegenüberliegende Seitenwände, die sich von ihr aus erstrecken. Der Hubbalkenförderer besitzt eine Vielzahl von Fördervorsprüngen, und die Seitenwände der Schokoladenformschale weisen Förderaussparungen zur Aufnahme der Fördervorsprünge auf. Auf diese Weise kann der Hubbalkenförderer sicher in die Schokoladenformschale eingreifen, um sie stromabwärts zu bewegen.

Zum Lagern ist es günstig, wenn die Produktträger stapelbar sind und eine grösstmögliche Stabilität des Stapels gewährleistet ist. Wie in EP0661002 A1 oder WO2019/081716 A1 gezeigt ist, kann der Produktträger dazu stufenartige Ausnehmungen aufweisen, in welche Standfüsse des Produktträgers eingreifen. In diesen stufenförmigen Ausnehmungen kann sich Schmutz sammeln.

Aufgabe der vorstehenden Erfindung ist es, die Nachteile des Bekannten zu vermeiden, und einen Produktträger sowie eine Transportvorrichtung bereit zu stellen, mittels derer ein variabler und gleichzeitig präziser Transport der Produktträger ermöglicht wird.

Die Aufgabe wird gelöst mit den Merkmalen der unabhängigen Ansprüche.

Ein erfindungsgemässer Produktträger ist zum Transport von Lebensmittelprodukten, insbesondere Schokoladenprodukten, in einer Transportvorrichtung, insbesondere in einer Anlage zur Herstellung von Lebensmittelprodukten geeignet.

Der Produktträger weist eine Oberseite zum Auf- und/oder Einlegen von Produkten und eine der Oberseite gegenüberliegenden Unterseite auf.

Der Produktträger besitzt eine rechteckige Grundform mit Längsseiten, die eine Länge in einer Längsrichtung aufweisen, und mit Breitseiten, die eine Breite senkrecht zur Längsrichtung aufweisen. Die Länge kann kleiner als die Breite sein.

Die Längsseiten erstrecken sich also in der Längsrichtung, die Breitseiten in einer dazu senkrechten Breitenrichtung.

Die Längsrichtung entspricht üblicherweise der Richtung, in welcher die Produktträger in einer Transportanlage vorwiegend transportiert werden, also der Transportrichtung.

Der Produktträger besitzt an den Längsseiten einander gegenüberliegende Längskantleisten, die jeweils eine Antriebsausnehmung aufweisen.

Die Längskantleisten schliessen bevorzugt mit der Oberseite einen rechten Winkel ein.

Die Antriebsausnehmungen der beiden Längskantleisten sind zu einer von der Oberseite wegweisenden Richtung offen.

Die Antriebsausnehmungen weisen jeweils eine Längsausdehnung von grösser 50%, bevorzugt grösser 80%, der Länge des Produktträgers auf. Auf jeder Längskantleiste ist demnach genau eine Antriebsausnehmung vorgesehen.

Die Antriebsausnehmungen weisen in sowie entgegen der Transportrichtung Anschlagkanten auf.

Die Antriebsausnehmungen sind bevorzugt so ausbildet, dass der Rand der Antriebsausnehmung mit der Unterkante der Längskantleiste einen Winkel zwischen 85° und 95° einschliesst.

Ein Mitnehmer einer Antriebskette oder einer Schubleistenanordnung kann in die Antriebsausnehmungen eingreifen und den Produktträger mitziehen. Dabei können die Mitnehmer an den Anschlagkanten anliegen ohne abzurutschen.

Da der Produktträger Anschlagkanten in und entgegen der Transportrichtung aufweist, spielt es keine Rolle, in welcher Richtung der Produktträger auf das Transportsystem aufgesetzt oder in das Transportsystem eingeführt wird.

Die Längsausdehnung der Antriebsausnehmungen erlaubt eine Flexibilität in der Transportgeschwindigkeit. So kann ein Mitnehmer innerhalb der Antriebsausnehmung bewegt werden, ohne den Produktträger fortzubewegen. Dabei kann zum Beispiel der Abstand zu anderen Produktträgern verändert werden, die bereits von parallel und gleichzeitig bewegten Mitnehmern bewegt werden.

Die Antriebsausnehmungen der beiden Längskantleisten liegen einander gegenüber. Die Antriebsausnehmungen sind bevorzugt gleich lang und bevorzugt gleich hoch. Dabei weist die Länge in Längsrichtung und die Höhe in eine Richtung, die senkrecht zur Längsrichtung und senkrecht zur Breitenrichtung ist.

Bevorzugt sind die Antriebsausnehmungen der beiden Längskantleisten symmetrisch ausgebildet bezüglich einer Mittelebene des Produktträgers in Längsrichtung, welche senkrecht zur Ausrichtung der rechteckigen Grundform des Produktträgers verläuft und eine Normale in Breitenrichtung aufweist.

Derartig ausgebildete Produktträger sind dafür geeignet, von in Transportrichtung genau gegenüberliegenden Mitnehmern mitgezogen zu werden.

Der Produktträger besitzt ausserdem an den Breitseiten einander gegenüberliegende Breitkantleisten. Die Breitkantleisten schliessen bevorzugt mit der Oberseite einen rechten Winkel ein.

Die Breitkantleisten weisen jeweils mindestens eine Führungsausnehmung auf. Die Führungsausnehmungen der Breitkantleisten sind zu der von der Oberseite wegweisenden Richtung offen. Sie weisen eine Längsausdehnung von kleiner 10%, bevorzugt kleiner 5%, der Breite des Produktträgers auf.

Die Führungsausnehmungen der beiden Breitkantleisten liegen einander gegenüber.

Gegenüberliegenden Führungsausnehmungen sind bevorzugt gleich lang und bevorzugt gleich hoch. Dabei weist die Längsausdehnung der Führungsausnehmungen in Richtung der Breitenausdehnung des Produktträgers und die Höhe in eine Richtung, die senkrecht zur Längsrichtung und senkrecht zur Breitenrichtung ist. Bevorzugt weisen alle Führungsausnehmungen die gleiche Längsausdehnung und Höhe auf.

Bevorzugt sind die Führungsausnehmungen der beiden Breitkantleisten symmetrisch ausgebildet bezüglich einer Mittelebene des Produktträgers, die senkrecht zur Ausrichtung der rechteckigen Grundform des Produktträgers und senkrecht zur Längsrichtung ist.

Eine Stegführung eines Transportsystems, die entlang der Transportrichtung verläuft, kann in die Führungsausnehmungen eingreifen, so dass der Produktträger von der Unterseite her gestützt wird.

Jede der Breitkantleisten kann ein bis acht Führungsausnehmungen aufweisen, für bis zu acht Stegführungen.

In Bereichen des Transportsystems, in welchen eine Kraft auf den Produktträger ausgeübt wird, kann der Produktträger bevorzugt auf mehr als einer Stegführung aufliegen und weist dazu mehr als eine Führungsausnehmung auf.

Der Produktträger besitzt Längskantleisten und Breitkantleisten. Diese stabilisieren den Produktträger, insbesondere wenn er aus Kunststoff hergestellt ist. Gleichzeitig sind mit den Ausnehmungen in den Kantleisten Angriffsmöglichkeiten für einen Antrieb und für eine Führung zur Verfügung gestellt.

An der Unterseite des Produktträgers kann mindestens eine Trennrippe angeordnet sein, die sich in Breitenrichtung und senkrecht zur Längsrichtung erstreckt.

Die Trennrippe bildet mindestens zwei Kanäle, welche zu einer von der Oberseite wegweisenden Richtung offen sind und entlang derer Luft leitbar ist.

Die Trennrippe weist insbesondere eine geringere Höhe auf als die Höhe der Längskantleisten und/oder der Breitkantleisten.

Die Trennrippe stabilisiert den Produktträger. Durch die Kanäle kann Luft entlang des Produktträgers geführt werden. Entsprechend der Ausrichtung der Trennrippe verlaufen die Kanäle wie die Trennrippe ebenfalls in Breiterichtung, also senkrecht zur Längsrichtung. Es kann daher während des Transports temperierende Luft, zum Beispiel Kühlluft, von der Seite an den Produktträger geblasen werden, die durch die Kanäle entlang des gesamten Produktträgers strömt und das transportierte Produkt dabei temperiert.

Die Trennrippe kann eine Materialstärke von 1mm bis 4mm aufweisen und wirkt als Leitblech für durchströmende Luft. Die Trennrippe kann eine Materialstärke aufweisen, die stärker oder geringer ist als die Materialstärke des Produktträgers im Bereich der Längskantleisten und/oder der Breitkantleisten.

Bevorzugt sind mehrere, insbesondere gleichmässig beabstandete, Trennrippen vorgesehen, die eine Mehrzahl von Kanälen bilden.

Die Trennrippe kann eine geringere Längsausdehnung aufweisen als die Breite des Produktträgers.

Die Trennrippe kann zwischen den Breitkantleisten angeordnet sein.

Die Höhe der Trennrippe ist bevorzugt kleiner als oder gleich wie die Höhe der Breitkantleisten an den Führungsausnehmungen. Die Trennrippe ist daher nicht im Weg, wenn eine in Transportrichtung verlaufenden Stegführung in die Führungsausnehmungen eingreift. Der Produktträger liegt dann bevorzugt im Bereich der Breitkantleisten auf der Stegführung auf.

In den Kanälen können Verstärkungsrippen angebracht sein, die sich in Längsrichtung erstrecken und die insbesondere eine geringere Höhe als die Trennrippe aufweisen. Bevorzugt sind in jedem Kanal mehrere parallel zueinander angeordnete und weiter bevorzugt gleichmässig beabstandete Verstärkungsrippen vorgesehen.

Verstärkungsrippen sind insbesondere zwischen Trennrippen angeordnet und verlaufen insbesondere senkrecht zu den Trennrippen.

Die Verstärkungsrippen sorgen insbesondere für eine weitere Stabilisierung des Produktträgers. Die Verstärkungsrippen behindern einen Luftstrom durch die Kanäle grundsätzlich nicht, sondern sorgen für eine Verwirbelung, die einen Wärmeaustausch zwischen der Luft und dem Produktträger begünstigt.

In einer vorteilhaften Ausführungsform des Produktträgers sind die Längskantleisten und/oder die Breitkantleisten zur Oberseite des Produktträgers hin abgeschrägt, bevorzugt entlang der gesamten Länge und/oder Breite des Produktträgers.

Der abgeschrägte Bereich der Breitkantleisten schliesst mit der Längsrichtung des Produktträgers bevorzugt einen Winkel zwischen 30° und 60° ein. Analog schliesst der abgeschrägte Bereich der Längskantleisten mit der Breitenausrichtung des Produktträgers bevorzugt einen Winkel zwischen 30° und 60° ein.

Bevorzugt ist die Abschrägung umlaufend um die Oberfläche des Produktträgers ausgebildet.

Die Produktträger sind dadurch gut stapelbar, denn die Längskantleisten und/oder die Breitkantleisten eines Produktträgers können auf den abgeschrägten Bereichen eines darunter angeordneten Produktträgers aufliegen. Die gegenüberliegenden Abschrägungen eines Produktträgers bieten eine Führung für die aufliegenden Längskantleisten und/oder Breitkantleisten, sodass ein stabiler Stapel entstehen kann.

Stapel von Produktträgern werden zum Beispiel gebildet, wenn die Produktträger gelagert werden und zum Einsatz bereitstehen oder, wenn die Produktträger mit gefüllten Alveolen gekühlt werden.

Bevorzugt sind die Längskantleisten, die Breitkantleisten, die Antriebsausnehmungen und die Trennrippen so ausgebildet, dass auch im gestapelten Zustand Kühlluft entlang der Kanäle geleitet werden kann.

Der Produktträger kann Stützleisten umfassen, welche jeweils parallel zu den Breitkantleisten angeordnet sind und welche die gleiche maximale Höhe wie die Breitkantleisten aufweisen können. Die Stützleisten können Ausnehmungen aufweisen, welche mit den Führungsausnehmungen der Breitkantleisten fluchten. Bevorzugt weisen die Stützleisten genauso viel Ausnehmungen auf wie die die Breitkantleisten. Die Ausnehmungen sind insbesondere symmetrisch zu der Führungsausnehmungen ausgebildet bezüglich einer Ebene, die senkrecht zur Ausrichtung der rechteckigen Grundform des Produktträgers und senkrecht zur Längsrichtung ist.

Auf der Oberseite des Produktträgers kann eine oder eine Mehrzahl von Alveolen angeordnet sein. Die Alveolen sind bevorzugt in die Oberseitenfläche eingelassen. Die Oberseitenfläche kann Vertiefungen aufweisen, welche die Alveolen bilden.

Bevorzugt ist der Produktträger einstückig ausgebildet. Der Produktträger kann ein Spritzgussteil sein, bei dem Alveolen, Längskantleisten, Breitkantleisten, Trennrippe, Verstärkungsrippen und/oder Stützleisten an einer rechteckigen Plattenbauteil angeformt sind.

Der Teil der Kontur der Führungsausnehmung, der an die von der Oberseite wegweisende Kante der Breitkantleisten anstösst, kann mit der von der Oberseite wegweisenden Kante der Breitkantleisten einen Winkel von 85°-95° einschliessen. Die Führungsausnehmung ist somit am Rand steil genug, damit eine Stegführung einen seitlichen Anschlag erfährt und nicht abrutschen kann.

Die Aufgaben wird ausserdem gelöst durch eine Transportvorrichtung, insbesondere in einer Anlage zur Herstellung von Lebensmittelprodukten, mit mindestens einem Produktträger, wie er zuvor beschrieben wurde.

Die Transportvorrichtung umfasst vorteilhafterweise mindestens einen bewegbaren Mitnehmer, welche dazu ausgebildet sind, an einer der Anschlagkanten des Produktträgers anzuliegen, um den Produktträger mitzuziehen. Bevorzugt umfasst die Transportvorrichtung bezüglich der Transportrichtung gegenüberliegende Mitnehmerpaare, die jeweils in gegenüberliegende Antriebsausnehmungen eines Produktträgers eingreifen.

Die Transportvorrichtung kann mindestens einen Streckenabschnitt mit mindestens einer Stegführung umfassen, die in die Führungsausnehmungen eingreift. Bevorzugt umfasst der Streckenabschnitt ein bis acht parallel zueinander und in Transportrichtung verlaufende Stegführungen.

Die Transportvorrichtung kann Streckenabschnitte mit weniger und Streckenabschnitte mit mehr parallel zueinander verlaufenden Stegführungen aufweisen, je nachdem, wieviel Abstützung ein Produktträger in dem jeweiligen Streckenabschnitt benötigt.

In Streckenabschnitten, in welchen ein Druck auf den Produktträger ausgeübt wird, zum Beispiel durch eine Leckwalze, liegen bevorzugt mehrere parallel verlaufende Stegführungen vor.

Der Produktträger hat mindestens so viele Führungsausnehmungen in den jeweiligen Breitkantleisten, wie die Maximalzahl der parallel verlaufenden Stegführungen in einer Transportanlage.

Der Mitnehmer kann an einer Transportkette oder an einer Schubleistenanordnung angeordnet sein.

Die Transportvorrichtung kann dazu ausgelegt sein, den Produktträger von einer Bearbeitungsstation zu einer nächsten Bearbeitungsstation zu bringen oder innerhalb einer Bearbeitungsstation zu transportieren. Bei der Bearbeitungseinrichtung kann es sich um einen Formenanwärmer, eine Kühlstation, eine Giessstation, eine Hülsenbildungsstation, eine Kaltstempelstation, eine Öffnungsbildungsstation, eine Füllstation, eine Einlegestation, eine Rüttelstation, eine Deckelstation, eine Ableckstation, eine Dekorierstation, eine Ausformstation, eine Ein- und/oder Ausstapelstation, eine Sprühstation, eine Druckerstation, eine Einlegestation, eine Verpackungsstation, eine Folienauflegestation und/oder eine Kontrollstation handeln.

Die Transportvorrichtung kann eine Roboteranordnung mit mindestens einem Greifer umfassen. Der Greifer kann in die Führungsausnehmungen des Produktträgers eingreifen. Der Greifer kann dazu eine Greifleiste umfassen, an welcher Stifte angeordnet sind, welche in die Führungsausnehmungen des Produktträgers eingreifen. Bevorzugt weist der Greifer an Anzahl von Stiften auf, die der Anzahl der Führungsausnehmungen in einer Breitkantleiste entspricht.

Auf der Längskantleiste und/oder der Breitkantleiste kann ein Kennzeichen zum Identifizieren des Produktträgers angebracht sein. Zum Beispiel kann ein Code, insbesondere ein Barcode, aufgedruckt, geätzt oder eingeritzt sein. Bevorzugt umfasst die Transportvorrichtung ein Lesegerät zum Erkennen des Kennzeichens.

Die Erfindung wird nachfolgend in Ausführungsbeispielen anhand von Zeichnungen erläutert. Es zeigen
- Figur 1: einen erfindungsgemässen Produktträger in einer ersten perspektivischen Ansicht;
- Figur 2: den erfindungsgemässen Produktträger in einer zweiten perspektivischen Ansicht;
- Figur 3: den erfindungsgemässen Produktträger in einer dritten perspektivischen Ansicht;
- Figur 4: einen Stapel von Produktträgern in einer Seitenansicht;
- Figur 5: einen Stapel von Produktträgern in einem Schnittbild;
- Figur 6: ein Detail aus Figur 5;
- Figur 7: den erfindungsgemässen Produktträger in einer vierten perspektivischen Ansicht;
- Figur 8: ein Detail aus Figur 7;
- Figur 9: eine erfindungsgemässe Transportvorrichtung in Schnittansicht;
- Figur 10: einen Greifer eines ersten Beispiels für eine Roboteranordnung mit einem Stapel von Produktträgern in Schnittansicht;
- Figur 11: ein zweites Beispiel für eine Roboteranordnung.

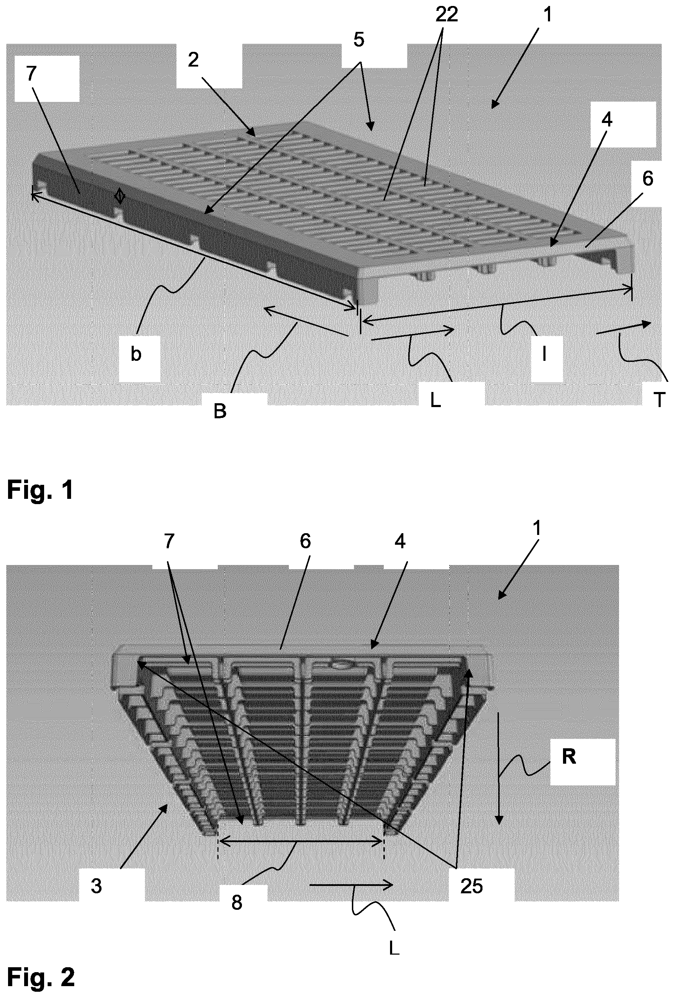

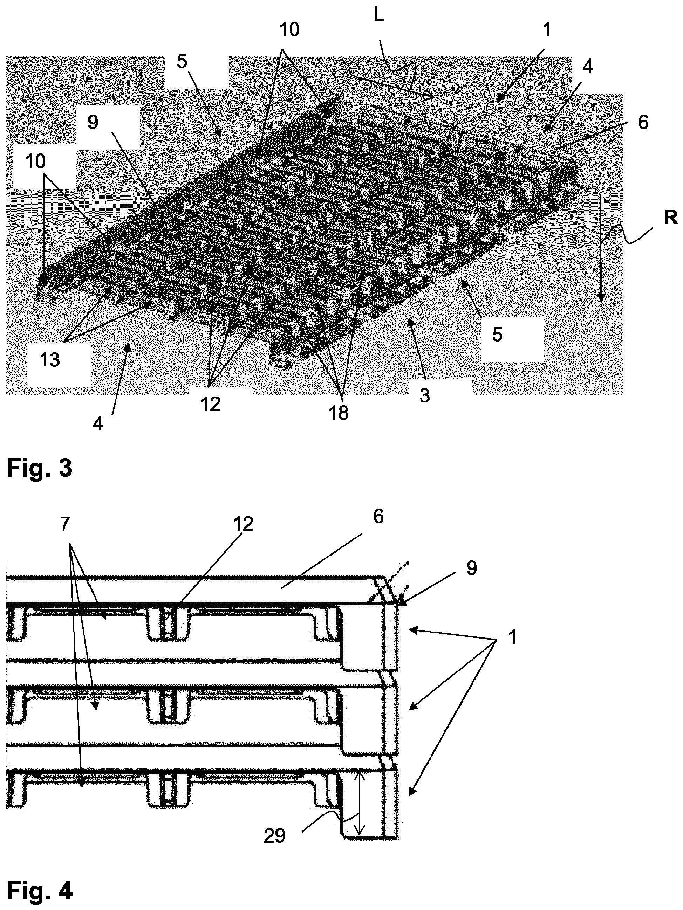

Figur 1 zeigt einen erfindungsgemässen Produktträger 1 in einer ersten perspektivischen Ansicht, Figur 2 den Produktträger 1 in einer zweiten perspektivischen Ansicht und Figur 3 den erfindungsgemässen Produktträger 1 in einer dritten perspektivischen Ansicht.

In Figur 1 ist die Oberseite 2 des Produktträgers 1 gezeigt, auf der eine Mehrzahl von Alveolen 22 zum Einlegen oder Einfüllen von Produkten angeordnet ist. Die Figuren 2 und 3 zeigen die der Oberseite 2 gegenüberliegenden Unterseite 3 des Produktträgers 1.

Der Produktträger 1 besitzt eine rechteckige Grundform mit Längsseiten 4, die eine Länge l in einer Längsrichtung L aufweisen, wobei die Längsrichtung der typischen Transportrichtung T entspricht. Der Produktträger 1 besitzt Breitseiten 5, die eine Breite b in einer Breiterichtung B senkrecht zur Längsrichtung L aufweisen.

An den Längsseiten 4 sind einander gegenüberliegende Längskantleisten 6 vorgesehen, die jeweils eine Antriebsausnehmung 7 aufweisen.

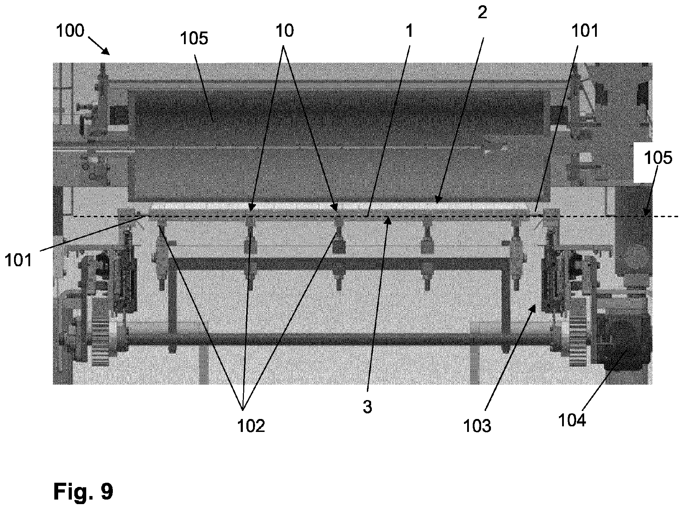

Die Antriebsausnehmungen 7 der beiden Längskantleisten 6 sind zu einer von der Oberseite 2 wegweisenden Richtung R offen und besitzen eine Längsausdehnung 8 von grösser 80% der Länge l des Produktträgers 1. In sowie entgegen der Längsrichtung L weisen die Antriebsausnehmungen 7 Anschlagkanten 25 auf, an denen Mitnehmer 101 (siehe Figur 9) anliegen können und den Produktträger 1 mitziehen oder schieben.

An den Breitseiten 5 sind einander gegenüberliegende Breitkantleisten 9 vorgesehen (siehe Figur 3), die jeweils fünf Führungsausnehmung 10 aufweisen, die zu der von der Oberseite 2 wegweisenden Richtung R offen sind.

An der Unterseite 3 des Produktträgers 1 sind drei Trennrippen 12 angeordnet, die sich senkrecht zur Längsrichtung L erstrecken. Die Trennrippen 12 trennen Kanäle 13 voneinander, welche zu der von der Oberseite 2 wegweisenden Richtung R offen sind.

Innerhalb der Kanäle 13 sind Verstärkungsrippen 18 angebracht, die sich in Längsrichtung L erstrecken. Diese stabilisieren den Produktträger 1.

Figur 4 zeigt einen Stapel von Produktträgern 1 in einer Seitenansicht. Die Längskantleisten 6 und die Breitkantleisten 9 sind zur Oberseite 2 der Produktträger 1 hin abgeschrägt. Wie in Figur 1 ersichtlich ist, sind die Längskantleisten 6 und die Breitkantleisten 9 entlang der gesamten Länge l und Breite b abgeschrägt.

Die Antriebsausnehmungen 7 weisen eine lichte Höhe 29 auf, die gross genug ist, damit Kühlluft auch durch die Kanäle 13 strömen kann, wenn die Produktträger 1 gestapelt sind.

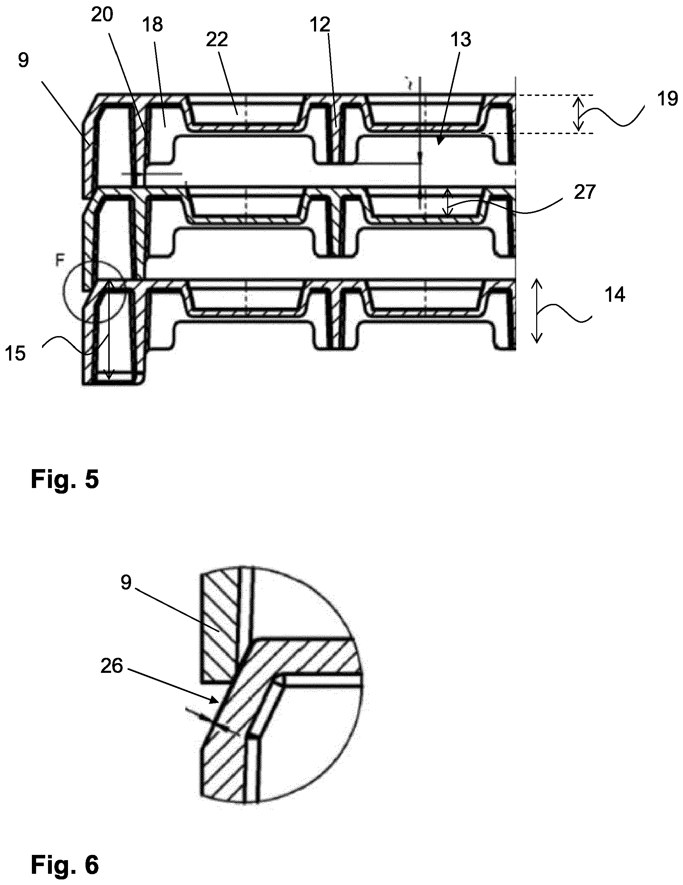

Figur 5 zeigt einen Stapel von Produktträgern in einem Schnittbild, Figur 6 ein Detail aus Figur 5.

Parallel zu den Breitkantleisten 9 sind Stützleisten 20 angeordnet, die den Produktträger 1 im Randbereich verstärken.

Die Trennrippen 12 weisen eine geringere Höhe 14 auf als die maximale Höhe 15 der Längskantleisten 6 und der Breitkantleisten 9. Die Höhe 14 der Trennrippen 12 ist aber grösser als die Tiefe 27 der Alveolen 22. Daher bilden sich die Kanäle 13 derart zwischen den Trennrippen 12, dass kühlenden Luft an der Unterseite der Alveolen 22 entlangströmen kann.

Die Breitkantleiste 9 eines oberen Produktträgers 1 sitzt auf dem abgeschrägten Bereich 26 des darunter befindlichen Produktträgers 1 auf. Der Produktträger 1 hat somit im Stapel einen festen Sitz. Der abgeschrägte Bereich 26 ist konkav und daher leicht zu reinigen.

Die Stützrippen 18 weisen grösstenteils eine Höhe 19 auf, die kleiner als die Höhe 14 der Trennrippen 12 ist, sie versperren damit nicht die Kanäle 13.

An der Kontaktstelle zu den Trennrippen 12 haben die Stützrippen 18 die gleiche Höhe 14 wie die Trennrippen 12, damit eine solide Verbindung besteht.

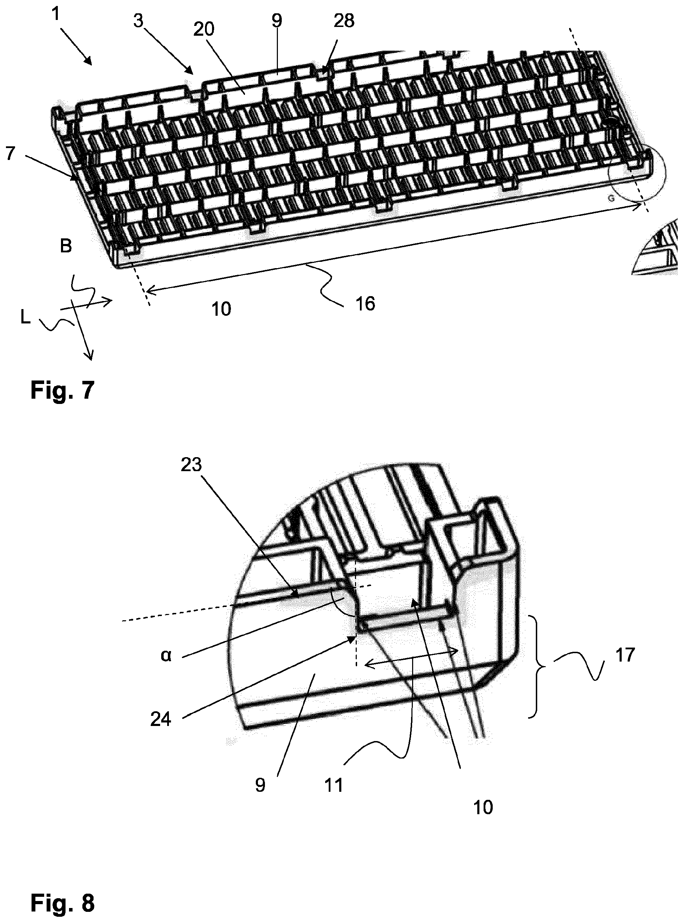

Figur 7 zeigt den erfindungsgemässen Produktträger 1 in einer vierten perspektivischer Ansicht auf die Unterseite und Figur 8 ein Detail aus Figur 7. Die Trennrippen 12 weisen eine geringere Längsausdehnung 16 in Breitenrichtung B auf als die Breite b des Produktträgers 1 (siehe Figur 1). Somit reichen die Trennrippen nicht in die Antriebsausnehmung 7 hinein und behindern nicht den Platz, den die Mitnehmer (siehe Figur 9) benötigen.

Die parallel zu den Breitkantleisten 9 angeordneten Stützleisten 20 weisen Ausnehmungen 28 auf, welche zu den Führungsausnehmung 10 in den Breitkantleisten 9 in Längsrichtung L fluchten.

Die Höhe 14 der Trennrippen 12 (siehe Figur 5) ist auch kleiner als die Höhe 17 der Breitkantleisten 9 an den Führungsausnehmungen 10. Die Trennrippen reichen daher auch nicht in den Bereich, den die Ausnehmungen 28 und die Führungsausnehmungen 10 aufspannen.

Die Ausnehmungen 28 und die Führungsausnehmungen 10 bieten somit eine Auflagefläche für eine Stegführung 102 (siehe Figur 9).

Die Ausnehmungen 28 und die Führungsausnehmungen 10 habe eine Breitenausdehnung 11 von kleiner 10% der Breite b des Produktträgers 1 (siehe Figur 1).

Der Teil 24 der Kontur der Führungsausnehmung 10, der an die von der Oberseite 2 wegweisenden Kante 23 der Breitkantleisten 9 anstösst, schliesst mit der von der Oberseite 2 wegweisenden Kante 23 der Breitkantleisten 9 einen Winkel α von etwa 90° ein.

Die Stegführung 102 (siehe Figur 9) hat daher in der Führungsausnehmung 10 einen festen Halt und der Produktträger 1 kann seitlich nicht verrutschen.

Figur 9 zeigt eine erfindungsgemässe Transportvorrichtung 100 in Schnittansicht. In der Transportvorrichtung 100 werden Produktträger 1 in Transportrichtung T, die hier senkrecht zur Darstellungsebene verläuft, transportiert.

Die Transportvorrichtung 100 umfasst bezügliche der Transportrichtung gegenüberliegende bewegbare Mitnehmer 101, welche den Produktträger 1 mitziehen. Die Mitnehmer 101 sind an einer Schubleistenanordnung 103 angeordnet. Die Schubleistenanordnung 103 verfügt über einen Antrieb 104, der die Mitnehmer 101 in Transportrichtung bewegt, danach vertikal von einer Transportebene 105, in welcher sich die Oberfläche des Produktträgers 1 befindet, wegbewegt, danach entgegen der Transportrichtung bewegt und danach vertikal zu der Transportebene 105 hinbewegt.

Dabei können die Mitnehmer 101 den nächsten Produktträger 1 greifen, der bei der nächsten Vorwärtsbewegung der Mitnehmern 1 mitgezogen wird.

Die Transportvorrichtung 100 umfasst fünf Stegführungen 102, die jeweils in die Führungsausnehmungen 10 der Produktträger 1 eingreifen. Die Produktträger 1 erfahren somit eine Stütze an der Unterseite 3, wenn sie einen Druck auf der Oberseite 2 erhalten, zum Beispiel von einer Leckwalze 105.

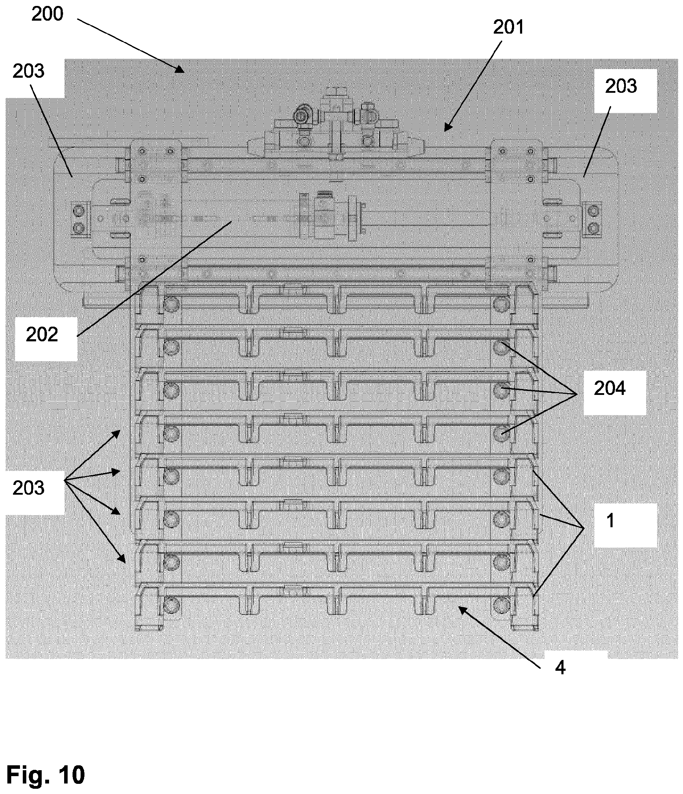

Figur 10 zeigt einen Greifer 201 einer Roboteranordnung 200 mit einem Stapel von Produktträgern 1 in Schnittansicht.

Der Greifer 201 umfasst eine Antriebseinheit 202, mit welcher der Abstand zwischen den Greiferbacken 203 verändert werden kann. Der oberste Produktträger 1, der zum Beispiel vom Stapel abgehoben werden soll, kann zwischen den Greiferbacken 203 eingeklemmt werden.

Der Greifer 201 kann mehrere Produktträger 1, nämlich bis zu zehn Produktträger 1, gleichzeitig aufnehmen. Hierzu besitzt er auf jeder Ebene 203 vier Bolzen 204, wobei je zwei Bolzen auf gegenüberliegenden Seiten des Produktträgers 1 angeordnet werden können, an um die Produktträger 1 einzeln aufzunehmen. Die Bolzen 204 werden von den Längsseite 4 unter die Produktträger 1 gefahren.

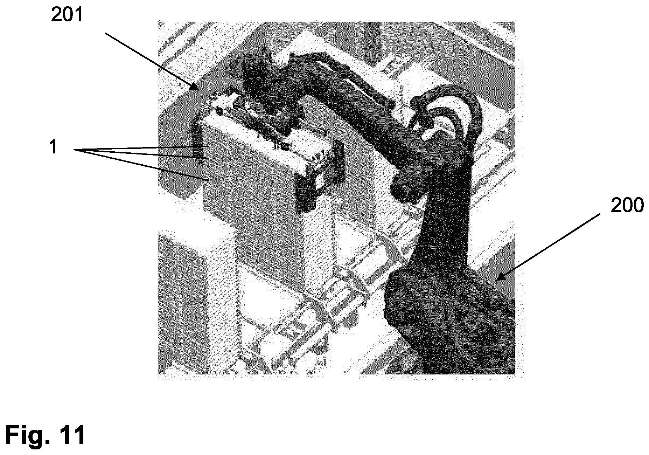

Figur 11 zeigt ein zweites Beispiel für eine Roboteranordnung 200. Die Roboteranordnung 200 umfasst einen Greifer 201, mit dem eine Vielzahl von gestapelten Produktträgern 1 fixiert und transportiert werden kann.

Die Produktträger 1 können eine Breitenausdehnung 11 (siehe Figur 7) von 272mm bis 1500mm und eine Längsausdehnung 8 (siehe Figur 2) von 275mm bis 460mm aufweisen.

Die Produktträger 1 können Kunststoff, insbesondere Polycarbonat, oder Metall enthalten oder daraus gefertigt sein.

Die Produktträger 1 können 5 bis 300 Alveolen 22 (siehe Figur 5) umfassen.

## Patentansprüche

1. Produktträger (1) zum Transport von Lebensmittelprodukten, insbesondere Schokoladenprodukten, in einer Transportvorrichtung (100), insbesondere in einer Anlage zur Herstellung von Lebensmittelprodukten,
wobei der Produktträger (1) eine Oberseite (2) zum Auf-und/oder Einlegen von Produkten und eine der Oberseite (2) gegenüberliegenden Unterseite (3) aufweist,
der Produktträger (1) eine rechteckige Grundform aufweist mit Längsseiten (4), die eine Länge (l) in einer Längsrichtung (L) aufweisen, und mit Breitseiten (5), die eine Breite (b) in einer Breiterichtung (B) senkrecht zur Längsrichtung (L) aufweisen,
**dadurch gekennzeichnet, dass**
der Produktträger (1) an den Längsseiten (4) einander gegenüberliegende Längskantleisten (6) besitzt, die jeweils eine Antriebsausnehmung (7) aufweisen,
wobei die Antriebsausnehmungen (7) der beiden Längskantleisten (6) zu einer von der Oberseite (2) wegweisenden Richtung (R) offen sind, eine Längsausdehnung (8) von grösser 50%, bevorzugt grösser 80%, der Länge (l) des Produktträgers (1) aufweisen und in sowie entgegen der Längsrichtung (L) Anschlagkanten (25) aufweisen,
und der Produktträger (1) an den Breitseiten (5) einander gegenüberliegende Breitkantleisten (9) besitzt, die jeweils mindestens eine Führungsausnehmung (10) aufweisen, wobei die Führungsausnehmungen (10) der Breitkantleisten (9) zu einer von der Oberseite (2) wegweisenden Richtung (R) offen sind, derart, dass eine Stegführung eines Transportsystems, die entlang der Transportrichtung verläuft, in die Führungsausnehmungen eingreifen kann, so dass der Produktträger von der Unterseite her gestützt wird, und wobei die Führungsausnehmungen (10) eine Breitenausdehnung (11) von kleiner 10%, bevorzugt kleiner 5%, der Breite (b) des Produktträgers (1) aufweisen.

2. Produktträger (1) gemäss Anspruch 1, wobei
an der Unterseite (3) des Produktträgers (1) mindestens eine Trennrippe (12) angeordnet ist, die sich senkrecht zur Längsrichtung (L) erstreckt, die mindestens zwei Kanäle (13) bilden, welche zu einer von der Oberseite (2) wegweisenden Richtung (R) offen sind, entlang derer Luft leitbar ist,
wobei die Trennrippen (12) insbesondere eine geringere Höhe (14) aufweisen als die Höhe (15) der Längskantleisten (6) und/oder der Breitkantleisten (9).

3. Produktträger (1) gemäss Anspruch 2, wobei die Trennrippe (12) eine geringere Längsausdehnung (16) aufweist als die Breite (B) des Produktträgers (1)
und/oder
die Höhe (14) der Trennrippe (12) kleiner als oder gleich wie die Höhe (15) der Breitkantleisten (9) an den Führungsausnehmungen (10) ist.

4. Produktträger (1) gemäss Anspruch 2 oder 3, wobei in den Kanälen (13) Verstärkungsrippen (18) angebracht sind, die sich in Längsrichtung (L) erstrecken und die insbesondere eine geringere Höhe (19) als die Trennrippe (12) aufweist.

5. Produktträger (1) gemäss einem der vorhergehenden Ansprüche, wobei die Längskantleisten (6) und/oder die Breitkantleisten (9) zur Oberseite (2) des Produktträgers (1) hin abgeschrägt sind, bevorzugt entlang der gesamten Länge (L) und/oder Breite (B).

6. Produktträger (1) gemäss einem der vorhergehenden Ansprüche, wobei der Produktträger Stützleisten (20) umfasst, die jeweils parallel zu den Breitkantleisten (9) angeordnet sind, die bevorzugt genauso viele Ausnehmungen (21) aufweisen wie die Breitkantleisten (9).

7. Produktträger (1) gemäss einem der vorhergehenden Ansprüche, wobei auf der Oberseite (2) der Produktträgers eine oder eine Mehrzahl von Alveolen (22) angeordnet ist.

8. Produktträger (1) gemäss einem der vorhergehenden Ansprüche, wobei die Länge (L) kürzer als Breite (B) ist.

9. Produktträger (1) gemäss einem der vorhergehenden Ansprüche, wobei jede der Breitkantleisten (9) ein bis acht Führungsausnehmungen (10) aufweist.

10. Produktträger (1) gemäss einem der vorhergehenden Ansprüche, wobei der Teil (24) der Kontur der Führungsausnehmung (10), der an die von der Oberseite (2) wegweisenden Kante (23) der Breitkantleisten (9) anstösst, mit der von der Oberseite (2) wegweisenden Kante (23) der Breitkantleisten (9) einen Winkel α von 85°-95° einschliesst.

11. Transportvorrichtung (100), insbesondere in einer Anlage zur Herstellung von Lebensmittelprodukten, mit mindestens einem Produktträger (1) gemäss einem der Ansprüche 1-10, die dazu eingerichtet ist, dass der Produktträger (1) in der Transportanlage vorwiegend in einer Richtung, die der Längsrichtung entspricht, transportiert wird.

12. Transportvorrichtung (100) nach Anspruch 11, umfassend mindestens einen bewegbaren Mitnehmer (101), welche dazu ausgebildet sind, an einer der Anschlagkanten (25) des Produktträgers (1) anzuliegen, um den Produktträger (1) mitzuziehen.

13. Transportvorrichtung (100) nach Anspruch 11 oder 12, umfassend mindestens einen Streckenabschnitt mit mindestens einer Stegführung (102), bevorzugt drei bis acht Stegführungen (102), die in die Führungsausnehmung (10) eingreifen.

14. Transportvorrichtung (100) nach einem der Ansprüche 12 oder 13, wobei der Mitnehmer (101) an einer Schubleistenanordnung (103) angeordnet ist.

15. Transportvorrichtung (100) nach einem der Ansprüche 11 bis 14, umfassend eine Roboteranordnung (200) mit einem Greifer (201), der in die Führungsausnehmungen (10) des Produktträgers (1) eingreift.

## Claims

1. A product carrier (1) for transporting food products, in particular chocolate products, in a transport device (100), in particular in a system for producing food products,
wherein the product carrier (1) has an upper side (2) for placing and/or inserting products and a lower side (3) opposite to the upper side (2),
the product carrier (1) has a rectangular basic shape with longitudinal sides (4) having a length (l) in a longitudinal direction (L) and with wide sides (5) having a width (b) in a width direction (B) perpendicular to the longitudinal direction (L),
**characterized in that**
on the longitudinal sides (4), the product carrier (1) has longitudinal edge strips (6) which are situated opposite one another and each of which has a drive recess (7),
wherein the drive recesses (7) of the two longitudinal edge strips (6) are open in a direction (R) facing away from the upper side (2), have a longitudinal extent (8) of greater than 50 %, preferably greater than 80c%, of the length (l) of the product carrier (1) and have stop edges (25) in and counter to the longitudinal direction (L),
and on the wide sides (5), the product carrier (1) has wide-side edge strips (9) which are situated opposite one another and each have at least one guide recess (10), wherein the guide recesses (10) of the wide-side edge strips (9) are open in a direction (R) facing away from the upper side (2), such that web guide of a transport system, which web guide runs along the transport direction, can engage in the guide recesses so that the product carrier is supported from the lower side, and wherein the guide recesses (10) have a width extent (11) of less than 10 %, preferably less than 5 %, of the width (b) of the product carrier (1).

2. The product carrier (1) according to claim 1, wherein
on the lower side (3) of the product carrier (1), at least one separating rib (12) is arranged which extends perpendicular to the longitudinal direction (L) and which form at least two channels (13) which are open in a direction (R) facing away from the upper side (2) and along which air can be guided,
wherein the separating ribs (12) have in particular a smaller height (14) than the height (15) of the longitudinal edge strips (6) and/or the wide-side edge strips (9).

3. The product carrier (1) according to claim 2, wherein the separating rib (12) has a smaller longitudinal extent (16) than the width (B) of the product carrier (1),
and/or
the height (14) of the separating rib (12) is less than or equal to the height (15) of the wide-side edge strips (9) at the guide recesses (10).

4. The product carrier (1) according to claim 2 or 3, wherein reinforcing ribs (18) are attached in the channels (13), which reinforcing ribs extend in the longitudinal direction (L) and in particular have a smaller height (19) than the separating rib (12).

5. The product carrier (1) according to any one of the preceding claims, wherein the longitudinal edge strips (6) and/or the wide-side edge strips (9) are beveled towards the upper side (2) of the product carrier (1), preferably along the entire length (L) and/or width (B).

6. The product carrier (1) according to any one of the preceding claims, wherein the product carrier comprises support strips (20), which are each arranged parallel to the wide-side edge strips (9) and which preferably have as many recesses (21) as the wide-side edge strips (9).

7. The product carrier (1) according to any one of the preceding claims, wherein one or a plurality of alveoli (22) is arranged on the upper side (2) of the product carrier.

8. The product carrier (1) according to any one of the preceding claims, wherein the length (L) is shorter than the width (B).

9. The product carrier (1) according to any one of the preceding claims, wherein each of the wide-side edge strips (9) has one to eight guide recesses (10).

10. The product carrier (1) according to any one of the preceding claims, wherein the part (24) of the contour of the guide recess (10) abutting against the edge (23) of the wide-side edge strips (9) facing away from the upper side (2) and the edge (23) of the wide-side edge strips (9) facing away from the upper side (2) enclose therebetween an angle α of 85° - 95°.

11. A transport device (100), in particular in a system for the production of food products, with at least one product carrier (1) according to any one of claims 1 - 10, which is which is configured so that the product carrier (1) is transported in the transport system predominantly in a direction that corresponds to the longitudinal direction.

12. The transport device (100) according to claim 11, comprising at least one movable driver (101) which are formed to rest against one of the stop edges (25) of the product carrier (1) in order to pull the product carrier (1) along.

13. The transport device (100) according to claim 11 or 12, comprising at least one track section with at least one web guide (102), preferably three to eight web guides (102), which engage in the guide recess (10).

14. The transport device (100) according to any one of claims 12 or 13, wherein the driver (101) is arranged on a push bar arrangement (103).

15. The transport device (100) according to any one of claims 1 to 14, comprising a robot arrangement (200) with a gripper (201) engaging in the guide recesses (10) of the product carrier (1).

## Revendications

1. Support de produit (1) destiné au transport de produits alimentaires, en particulier de produits à base de chocolat, dans un dispositif de transport (100), notamment dans une système de production de produits alimentaires,
le support de produit (1) présentant une face supérieure (2) destinée à recevoir et/ou à insérer des produits et une face inférieure (3) opposée à la face supérieure (2),
le support de produit (1) ayant une forme de base rectangulaire avec des côtés longitudinaux (4) de longueur (l) dans une direction longitudinale (L), et des côtés transversaux (5) de largeur (b) dans une direction transversale (B) perpendiculaire à la direction longitudinale (L),
**caractérisé en ce que**
sur les côtés longitudinaux (4),le support de produit (1) comporte des bandes de bord longitudinales (6) opposées l'une à l'autre et qui comporte chacune un évidement d'entraînement (7)
les évidements d'entraînement (7) des deux bandes de bord longitudinales (6) étant ouverts dans une direction (R) orientée à l'opposé de la face supérieure (2), ayant une extension longitudinale (8) supérieure à 50%, de préférence supérieure à 80%, de la longueur (l) du support de produit (1) et comportant des arêtes de butée (25) dans la même direction que ainsi qu'en sens inverse de la direction longitudinale (L),
et sur les côtés transversaux (5), le support de produit (1) comporte des bandes de bord transversal (9) opposées les unes aux autres et comportant chacune au moins un évidement de guidage (10), les évidements de guidage (10) des bandes de bord transversal (9) étant ouverts dans une direction (R) orientée à l'opposé de la face supérieure (2), de telle sorte qu'un guide en forme de nervures d'un système de transport, s'étendant selon la direction de transport, puisse s'engager dans les évidements de guidage (10), de sorte que le support de produit soit maintenue depuis la face inférieur, et les évidements de guidage (10) ayant une extension en largeur (11) inférieure à 10%, de préférence inférieure à 5%, de la largeur (b) du support de produit (1).

2. Support de produit (1) selon la revendication 1, dans lequel
au moins une nervure de séparation est agencée sur la face inférieure (3) du support de produit (1), laquelle s'étend perpendiculairement à la direction longitudinale (L), et forme au moins deux canaux (13) ouverts dans une direction (R) orientée à l'opposé de la face supérieure (2), et le long desquels l'air peut être dirigé,
les nervures de séparation (12) présentant en particulier une hauteur (14) inférieure à la hauteur (15) des bandes de bord longitudinales (6) et/ou des bandes de bord transversal (9).

3. Support de produit (1) selon la revendication 2, dans lequel
la nervure de séparation (12) présente une extension longitudinale (16) inférieure à la largeur (B) du support de produit (1)
et/ou
la hauteur (14) de la nervure de séparation (12) est inférieure ou égale à la hauteur (15) des bandes de bord transversal (9) au niveau des évidements de guidage (10).

4. Support de produit (1) selon la revendication 2 ou 3, dans lequel des nervures de renforcement (18) sont disposées dans les canaux (13), s'étendant dans la direction longitudinale (L) et présentant notamment une hauteur (19) inférieure à celle de la nervure de séparation (12)

5. Support de produit (1) selon l'une quelconque des revendications précédentes, dans lequel les bandes de bord longitudinales (6) et/ou les bandes de bord transversal (9) sont chanfreinées en direction de la face supérieure (2) du support de produit (1), de préférence sur toute la longueur (L) et/ou la largeur (B).

6. Support de produit (1) selon l'une quelconque des revendications précédentes, dans lequel le support de produit comprend des bandes de support (20) disposées parallèlement chacune aux bandes de bord transversal (9), et compoortant de préférence autant d'évidements (21) que lesdits bande de bord transversal (9).

7. Support de produit (1) selon l'une quelconque des revendications précédentes, dans lequel une ou une pluralité d'alvéoles (22) sont disposées sur la face supérieure (2) du support de produit.

8. Support de produit (1) selon l'une quelconque des revendications précédentes,
dans lequel la longueur (L) est inférieure à la largeur (B).

9. Support de produit (1) selon l'une quelconque des revendications précédentes,
chacune des bandes de bord transversal (9) comporte un à huit évidements de guidage (10).

10. Support de produit (1) selon l'une quelconque des revendications précédentes,
dans lequel la portion (24) du contour de l'évidement de guidage (10) en contact avec le bord (23) des bandes de bord transversal (9) orienté à l'opposé de la face supérieure (2) et ledit bord (23), forment un angle α comprise entre 85 -95°.

11. Dispositif de transport (100), notamment dans une système de production de produits alimentaires, comprenant au moins un support de produit (1) selon l'une quelconque des revendications 1 à 10, **caractérisé en ce qu'**il est configuré de sorte que le support de produit (1) soit transporté dans le système de transport principalement dans une direction correspondant à la direction longitudinale.

12. Dispositif de transport (100) selon la revendication 11, comprenant au moins un poussoir mobile (101) adapté pour venir en appui contre l'un des arrêtes de butée (25) du support de produit (1) afin d'entraîner le support de produit (1).

13. Dispositif de transport (100) selon la revendication 11 ou 12, comprenant au moins une section de voie comportant au moins un guide en forme de nervure (102), de préférence trois à huit guides (102), lesquels s'engagent dans l'évidement de guidage (10).

14. Dispositif de transport (100) selon l'une quelconque des revendications 12 ou 13, dans lequel le poussoir (101) est disposé sur un agencement à barre de poussée (103).

15. Dispositif de transport (100) selon l'une quelconque des revendications 11 à 14, comprenant un ensemble robotique (200) avec un préhenseur (201) s'engageant dans les évidements de guidage (10) du support de produit (1).
